Europäisches Patentamt

European Patent Office

Office européen des brevets

(11) Veröffentlichungsnummer: **0 021 131**
**A1**

## (12) EUROPÄISCHE PATENTANMELDUNG

(21) Anmeldenummer: 80103056.0

(22) Anmeldetag: 02.06.80

(51) Int. Cl.³: **C 08 F 8/00**
**// A61L15/00**

(30) Priorität: 09.06.79 DE 2923435

(43) Veröffentlichungstag der Anmeldung: 07.01.81
Patentblatt 81/1

(84) Benannte Vertragsstaaten: BE DE FR GB IT NL

(71) Anmelder: HOECHST AKTIENGESELLSCHAFT, KALLE,
Patentabteilung Postfach 3540,
D-6200 Wiesbaden 1 (DE)

(72) Erfinder: Holst, Arno, Dr., Drususstrasse 3,
D-6200 Wiesbaden (DE)
Erfinder: Eberhard, Perplies, Dr., Rhönstrasse 11,
D-6229 Walluf (DE)

(54) **Verfahren zur Herstellung von quellfähigen, vernetzten Ethern des Polyvinylalkohols und deren Verwendung.**

(57) Die Erfindung betrifft ein Verfahren zur Herstellung von quellfähigen, zu mehr als 40 Gew.% wasserunlöslichen, vernetzten Ethern des Polyvinylalkohols durch Veretherung von Polyvinylalkohol, unter vorhergehender, gleichzeitiger oder nachfolgender Vernetzung in wäßrig-alkalischem, gegebenenfalls ein organisches Lösemittel enthaltendem Medium, wobei die Vernetzungsmittel mindestens bifunktionell gegenüber den Hydroxylgruppen des Polyvinylalkohols und/oder des Polyvinylethers reaktionsfähige Verbindungen sind. Es werden in diesem Verfahren auf 1 Mol Polyvinylalkohol 0,1 bis 0,8 Mol Alkalihydroxid, 0,5 bis 5,0 Mol Wasser, 0,001 bis 0,05 Mol Vernetzungsmittel und 0,01 bis 1,0 Mol Veretherungsmittel eingesetzt. Die Vernetzungsmittel sind insbesondere Dichloressigsäure, Phosphoroxychlorid, Bisacrylamido-Derivate oder Epichlorhydrin, als Veretherungsmittel wird bevorzugt eine Monohalogenalkancarbonsäure oder ihr Salz eingesetzt. Die nach diesem Verfahren hergestellten vernetzten Ether des Polyvinylalkohols können zur Aufnahme und/oder Zurückhaltung von wäßrigen Flüssigkeiten oder von Feuchte Verwendung finden.

HOECHST AKTIENGESELLSCHAFT
KALLE Niederlassung der Hoechst AG

Hoe 79/K 021          - 1 -          30. Mai 1980
                                     WLK-Dr.I.-dg


Verfahren zur Herstellung von quellfähigen, vernetzten
Ethern des Polyvinylalkohols und deren Verwendung


Die Erfindung betrifft ein Verfahren zur Herstellung von quellfähigen, zu mehr als 40 Gew.-% wasserunlöslichen, vernetzten Ethern des Polyvinylalkohols und die Verwendung dieser Ether.

Quellfähige hochmolekulare Verbindungen haben beispielsweise große Bedeutung als Zusatz oder alleiniger Bestandteil in Massen, die physiologische Flüssigkeiten wie Harn, Blut, Schweiß oder Speichel aufsaugen können, also auf den Gebieten der Babypflege, der Monatshygiene und für den Arzt- und Krankenhausbedarf. Zum Zeitpunkt der Einreichung dieser Anmeldung besteht beispielsweise der Großteil der Saugkörper in Tampons, Monatsbinden, Windeln, Windelhöschen oder Betteinlagen immer noch aus Cellulose oder regenerierter Cellulose. In zunehmendem Maße wird jedoch die Cellulose wenigstens teilweise durch halb- oder vollsynthetische saugfähige, hochmolekulare Verbindungen ersetzt (z. B. Polyacrylamid-, Polyethylenoxid-, Cellulose- oder Stärkederivate), weil die Anforderungen der Verbraucher einerseits auf weniger voluminöse Gebilde (z. B. Minibinden, Slipeinlagen, dünnere Windelhöschen), andererseits auf größere Saugfähigkeit und ein größeres Rückhaltevermögen für die physiologischen Flüssigkeiten hinzielen.


Ein weiteres Anwendungsgebiet für quellfähige hochmolekulare Verbindungen ist die Verbesserung der Wasserdampfaufnahme-

HOECHST AKTIENGESELLSCHAFT
KALLE Niederlassung der Hoechst AG

- 2 -

fähigkeit und/oder -durchlässigkeit von gebundenen Vliesen, selbsttragenden flächigen Polymergebilden oder Beschichtungen, die für verschiedene technische Anwendungsgebiete von Interesse sind. Dazu zählen ihre substituierenden Anwendungen vor allem für Leder oder bestimmte Textilien auf deren Einsatzgebieten, z. B. für Schuhe (Schuhobermaterial, Futter, Sohlen), Täschnerwaren, Polsterbezüge, Oberbekleidung ("Leder"- und Allwetterbekleidung), Textilien bzw. Haushaltshilfsmittel (Tischdecken, Fenster-"Leder", Wischtücher) oder für Abdeckungen (Zeltmaterial, Planen).

Aus dem Stand der Technik sind bereits einige Verfahrensweisen zur Herstellung vernetzter Ether des Polyvinylalkohols oder von vernetztem Polyvinylalkohol bekannt:

Aus der DE-AS 15 70 191 (= US-PS 3 542 759) ist ein Verfahren zur Herstellung von Ethern aus Mischpolymerisaten von Hydroxylgruppen enthaltenden Verbindungen bekannt. In den dabei entstehenden Ethern sind mindestens 50 % der pro Molekulareinheit des Mischpolymeren veretherbaren Hydroxylgruppen substituiert. Zur Herstellung der Produkte werden zwei Verfahrensvarianten aufgeführt, entweder wird das Mischpolymere (eine vernetzte, Hydroxylgruppen enthaltende Verbindung) mit einem Epoxid oder einem entsprechenden Halogenhydrin verethert, oder die Hydroxylgruppen enthaltende Verbindung wird zuerst verethert und anschließend mit einem bifunktionellen Derivat des Glycerins (z. B. Epichlorhydrin) vernetzt. Beide Verfahrensvarianten werden unter alkalischen Bedingungen ausgeführt und ergeben in Wasser unlösliche, aber in Wasser, Chloroform, Alkoholen, Ethern oder chlorierten Kohlenwasserstoffen gut quellbare Produkte. Als Hydroxylgruppen enthaltende Verbindung wird neben Dextran, Stärke oder Cellulose auch Polyvinylalkohol genannt. Die Veretherungsreaktion wird in einer ein unpolares organisches Lösemittel wie Heptan enthaltenden Suspension ausgeführt. Die Verfahrensprodukte sollen die Durchführung von Molekularsiebverfahren in mehr oder weniger polaren organischen Lösemitteln ermöglichen.

Das Verfahren zur Herstellung eines frei-fließenden, in Wasser quellbaren hydrophilen Polymerisats in Teilchenform gemäß der DE-AS 22 64 027 wird so durchgeführt, daß man eine Mischung aus einem wasserlöslichen, hydrophilen Polymeren und einem inerten Füllmittel in Anwesenheit von Wasser einer ionisierenden Strahlung aussetzt. Als geeignete wasserlösliche, hydrophile Polymere werden neben Polyethylenoxid oder Celluloseethern auch Polyvinylalkohol oder Polyvinylether genannt; Beispiele für inerte Füllmittel sind Holzmehl, Celluloseflocken oder Talkum.

In der DE-OS 24 03 269 werden Mittel zum Reinigen von Flüssigkeit abgebenden Hautoberflächen, Wunden und Schleimhäuten beschrieben, die dazu ein wasserunlösliches, hydrophiles, unter Gelbildung quellbares Polymeres enthalten, das beispielsweise aus Polyvinylalkohol und einer vernetzenden Komponente hergestellt werden kann.

Aus der AT-PS 223 141 (= US-PS 3 275 576) ist ein Verfahren zur Herstellung vernetzter, veretherter Produkte bekannt, bei dem chemisch (z. B. durch Epichlorhydrin) vernetzte,

HOECHST AKTIENGESELLSCHAFT
KALLE Niederlassung der Hoechst AG

- 4 -

wasserunlösliche, Hydroxylgruppen enthaltende kolloidale Stoffe (u. a. Polyvinylalkohol) mit Verbindungen der allgemeinen Formel X - R - Z unter alkalischen Bedingungen zur Reaktion gebracht werden; in der allgemeinen Formel bedeutet X: Chlor, Brom oder eine Epoxygruppe, R eine Methylen- oder Ethylengruppe und Z die Carboxyl-, Sulfo- oder eine tertiäre Aminogruppe. Beispiele für Verbindungen der allgemeinen Formel X - R - Z sind Chloressigsäure, Chlorethansulfonsäure oder 1-Diethylamino-2,3-epoxypropan. Die Reaktion wird in wäßrigem, gegebenenfalls ein unpolares organisches Lösemittel (z. B. Toluol) enthaltendem Medium durchgeführt, es soll mindestens jede fünfzehnte und maximals jede zweite Hydroxylgruppe des vernetzten kolloidalen Stoffes substituiert werden, um die Produkte als Ionenaustauscher geeignet zu machen.

Das Verfahren zur Herstellung von hochmolekularen hydrophilen Vernetzungsprodukten von u. a. Polyvinylalkohol in Form von Gelkörnern gemäß der DE-OS 14 43 359 (= US-PS 3 208 994) wird in alkalischem Medium mit Polyvinylalkohol und einem Vernetzungsmittel mit Halogen- oder Epoxygruppen (z. B. Epichlorhydrin) so durchgeführt, daß ein Zweiphasensystem (Dispersion) aus Wasser oder einem anderen starkpolaren Lösemittel wie einem Alkohol oder einem Keton als Lösemittel für die zu vernetzende Substanz und aus einem weniger polaren, mit der ersten Flüssigkeit nicht mischbaren organischen Lösemittel wie Toluol, o-Dichlorbenzol, Dichlormethan oder Monochlorethan als Lösemittel für das Vernetzungsmittel zur Anwendung kommt. Zur Stabilisierung des Zweiphasensystems können noch wasserunlösliche Polymere

HOECHST AKTIENGESELLSCHAFT
KALLE Niederlassung der Hoechst AG

- 5 -

(z. B. Polyvinylacetat) zugesetzt werden. Der Stabilisator wird nach der eigentlichen Vernetzung unter hydrolysierenden Bedingungen von den Gelkörnern entfernt. Das molare Mengenverhältnis der zu vernetzenden Verbindung zum Vernetzungsmittel soll wenigstens 1 : 10 betragen. Die Reaktionsprodukte finden als Molekularsiebe Verwendung. Beispielsweise werden 20 g Polyvinylalkohol in 140 cm³ Wasser und 60 cm³ einer wäßrigen 5n NaOH-Lösung gelöst, und diese Lösung wird in 200 cm³ Dichlorethan dispergiert; die Vernetzung erfolgt mit 20 cm³ Epichlorhydrin während 16 h bei 50° C und während 4 h bei 70° C, das Vernetzungsprodukt nimmt 9,1 g pro g des trockenen Produkts an Wasser auf.

Die aus dem Stand der Technik bekannten Verfahren und die danach hergestellten Produkte weisen aber u. a. die folgenden Nachteile auf:

- Die Vernetzungs- und/oder Veretherungsreaktionen werden in relativ große Mengen an organischen Lösemitteln enthaltenden Suspensionen durchgeführt, wodurch einerseits bei der Aufarbeitung (z. B. beim Absaugen zur Abtrennung der festen von den flüssigen oder gelösten Mischungskomponenten) der fertigen Reaktionsgemische größere Lösemittelmengen anfallen, und andererseits - bedingt durch die angequollene Feststoffmasse und eine gewisse "Klebrigkeit" des Polyvinylalkohols und der Polyvinylalkoholderivate - die Auftrennung der Gemischkomponenten verhältnismäßig lange Zeit dauert und nur erschwert durchführbar ist.

HOECHST AKTIENGESELLSCHAFT
KALLE Niederlassung der Hoechst AG

- 6 -

- Das Aufnahme- und Rückhaltevermögen der Verfahrensprodukte für wäßrige Flüssigkeiten reicht für viele
Anwendungsgebiete noch nicht aus, in denen beispielsweise WRV-Werte von 1.000 und mehr gefordert werden.

- Den zitierten Schriften sind keine konkreten Anregungen zur Vernetzung und Veretherung von Polyvinylalkohol zu entnehmen, die Beispiele beziehen sich
nahezu ausschließlich auf die Vernetzung und/oder
Veretherung von Cellulose, Stärke oder Dextran.
Eine Übertragung der von diesen Verbindungen her
bekannten Reaktionsbedingungen auf Polyvinylalkohol
ist aber nicht ohne weiteres möglich, da sich dieser
allein schon von der Molekülstruktur und den Moleküleinheiten her wesentlich von den Polysacchariden
unterscheidet. Lediglich in der DE-OS 14 43 359 wird
im Beispiel 13 auch Polyvinylalkohol umgesetzt, allerdings wird ausschließlich eine Vernetzung durchgeführt;
ähnliches gilt für die Beispiele 23, 24 und 36 der
DE-AS 22 64 027.

Aufgabe der vorliegenden Erfindung ist es, ein Verfahren
zur Herstellung von besonders quellfähigen Derivaten des
Polyvinylalkohols vorzuschlagen, das mit verhältnismäßig
geringen Mengen an Flüssigkeit im Reaktionsgemisch durchgeführt werden kann und zu Produkten führt, die in ihrem
Aufnahme- und Rückhaltevermögen für wäßrige Flüssigkeiten
gegenüber den aus dem Stand der Technik bekannten Polyvinylalkoholderivaten verbessert sind.

HOECHST AKTIENGESELLSCHAFT
KALLE Niederlassung der Hoechst AG

- 7 -

Die Erfindung geht aus von einem Verfahren zur Herstellung von quellfähigen, zu mehr als 40 Gew.-% wasserunlöslichen, vernetzten Ethern des Polyvinylalkohols durch Veretherung von Polyvinylalkohol unter vorhergehender, gleichzeitiger oder nachfolgender Vernetzung mit mindestens bifunktionell gegenüber den Hydroxylgruppen des Polyvinylalkohols und/ oder des Polyvinylethers reaktionsfähigen Vernetzungsmitteln in wäßrig-alkalischem, gegebenenfalls ein organisches Lösemittel enthaltendem Medium. Das erfindungsgemäße Verfahren ist dadurch gekennzeichnet, daß auf 1 Mol Polyvinylalkohol 0,1 bis 0,8 Mol Alkalihydroxid, 0,5 bis 5,0 Mol Wasser, 0,001 bis 0,05 Mol Vernetzungsmittel und 0,01 bis 1,0 Mol Veretherungsmittel eingesetzt werden.

Wenn die nach dem erfindungsgemäßen Verfahren hergestellten Produkte mit wäßrigen Flüssigkeiten, insbesondere mit mehr als 50 Gew.-% Wassergehalt, oder mit anderweitig mit ihnen in Kontakt tretenden Wassermolekülen (z. B. Wasserdampf) in Wechselwirkung treten, quellen sie. Die Produkte fallen bei der Reaktion normalerweise als Pulver oder Granulate an, die zu feineren Größen bei Bedarf gemahlen werden können. Unter den Begriff "Polyvinylalkohol" sollen solche Polyvinylderivate fallen, in denen mindestens 75 % der Substituenten Hydroxylgruppen sind, der Rest der Gruppen können beispielsweise noch Estergruppen wie Acetat (Ester der Essigsäure)-Gruppen sein; es wird auf Römpps Chemie- Lexikon, Franckh'sche Verlagsbuchhandlung - Stuttgart, 7. Auflage, 1976, Stichwörter "Polyvinylacetat" und "Polyvinylalkohol" auf den Seiten 2775 und 2776 verwiesen. Unter "1 Mol Polyvinylalkohol" ist dabei die Molekularmasse in

0021131

HOECHST AKTIENGESELLSCHAFT
KALLE Niederlassung der Hoechst AG

- 8 -

g der Einheit $[-CH_2 - CH(OH) -]$ des Polymeren zu verstehen.
Der Polyvinylalkohol kommt in kleinteiliger Form, bevorzugt als Pulver oder Granulat zum Einsatz.

Als Alkalisierungsmittel kommt aus wirtschaftlichen Gründen
fast immer wäßrige NaOH-Lösung in Betracht, doch lassen sich
auch andere wäßrige Alkalien wie KOH- oder LiOH-Lösungen
verwenden. Als monofunktionell reagierende Veretherungsmittel werden vor allem Monohalogenalkancarbonsäuren wie
Monochloressigsäure oder ihre Salze wie Na-monochloracetat
eingesetzt, aber auch Methylchlorid, Ethylchlorid, Ethylenoxid, Propylenoxid allein oder in Mischung von zwei oder
mehr von ihnen. Die so hergestellten Polyvinylether sollen
Substitutionsgrade (DS oder MS) aufweisen, daß sie für den
DS zwischen 0,05 bis etwa 0,5 liegen, die MS-Werte können
- bei Mehrfachsubstitution wie beispielsweise durch Alkylenoxide - entsprechend höher liegen.

Im erfindungsgemäßen Verfahren wird außer der Veretherungsreaktion auch eine dieser vorhergehende, gleichzeitig oder
nachfolgend stattfindende Vernetzung durchgeführt, so daß
die dabei entstehenden vernetzten Polyvinylether zu mehr
als 40 Gew.-% wasserunlöslich und quellfähig sind, d. h.
sie können Wasser in größerem Maße aufnehmen und auch mehr
oder weniger gut zurückhalten, ohne dabei vollständig aufgelöst zu werden. Als mindestens bifunktionell reagierende
Vernetzungsmittel sind insbesondere Dichloressigsäure,
Phosphoroxychlorid oder Verbindungen geeignet, die als
funktionelle Gruppe(n) mindestens zweimal

HOECHST AKTIENGESELLSCHAFT
KALLE Niederlassung der Hoechst AG

- 9 -

a) die Acrylamidogruppe, wobei R = H oder $CH_3$ ist,

b) die Chlor-azomethingruppe,

c) $-\overline{N} = C - \overline{O} - CH_2 - CH = CH_2$ die Allyloxy-azomethingruppe

oder mindestens einmal

d) eine $\alpha$-Halogen-epoxygruppe, wobei Hal = Cl oder Br ist

aufweisen.

Beispiele für solche, die genannten funktionellen Gruppen a) bis d) tragende Verbindungen sind:

Methylen-bisacrylamid
Bisacrylamido-essigsäure
N,N'-Dimethylol-methylen-bisacrylamid
1,1-Bisacrylamido-ethan
Methylen-bismethacrylamid
2,4,6-Trichlor-pyrimidin
2,4,5,6-Tetrachlor-pyrimidin
Cyanurchlorid
Triallylcyanurat
Epichlorhydrin

HOECHST AKTIENGESELLSCHAFT
KALLE Niederlassung der Hoechst AG

- 10 -

Bevorzugt werden Bisacrylamidoderivate oder Epichlorhydrin im erfindungsgemäßen Verfahren eingesetzt. Die Vernetzungsmittel können normalerweise nicht nur mit den Hydroxylgruppen des Polyvinylalkoholmoleküls bzw. den noch unveretherten Hydroxylgruppen des Polyvinylethermoleküls in Reaktion treten, sondern dies ist auch mit Hydroxylgruppen in den Ethersubstituenten selbst möglich, beispielsweise bei einem Hydroxyalkylgruppen tragenden Polyvinylether.

In einer bevorzugten Ausführungsform des erfindungsgemäßen Verfahrens werden auf 1 Mol Polyvinylalkohol 0,25 bis 0,5 Mol Alkalihydroxid, 0,7 bis 3,0 Mol Wasser, 0,002 bis 0,02 Mol Vernetzungsmittel und 0,1 bis 0,4 Mol Veretherungsmittel eingesetzt. Wenn das Veretherungs- und/oder Vernetzungsmittel saure, d. h. Alkalihydroxid verbrauchende Gruppen (z. B. Carboxylgruppen) trägt, so muß entsprechend mehr Alkalihydroxid eingesetzt werden als bei neutralen oder bereits in der Salzform vorliegenden Verbindungen.

In allen Reaktionsstufen des erfindungsgemäßen Verfahrens können zusätzlich 0,01 bis 1,0 Gew.-Teile eines organischen Lösemittels pro Gew.-Teil Polyvinylalkohol eingesetzt werden, wobei dieses Lösemittel vorteilhaft ein Alkohol mit einem bis sechs C-Atomen ist, beispielsweise Methanol, Ethanol. Isopropanol, n-Butanol, tert. Butanol oder Cyclohexanol, wobei diese organischen Lösemittel, insbesondere die höheren Alkohole, mit den Reaktionsteilnehmern wenig oder gar nicht reagieren. Bevorzugt wird dabei als Alkohol Isopropanol verwendet, zweckmäßig in der in der Technik gebräuchlichen Form mit etwa 13 Gew.-% Wasser.

Für die Vernetzung bestehen insbesondere drei Möglichkeiten
der Reaktionsführung mit den folgenden Parametern:

- Das Vernetzungsmittel wird vor der Veretherung mit
Polyvinylalkohol, wäßriger Alkalihydroxid-Lösung
und gegebenenfalls einem organischen Lösemittel bei
Raumtemperatur während etwa 15 bis 45 min vermischt
(Anvernetzung), nach Zugabe des Veretherungsmittels
wird dann die Temperatur auf bis zu etwa 85° C erhöht
und die Reaktion während etwa 30 bis 75 min beendet.

- Polyvinylalkohol, wäßrige Alkalihydroxid-Lösung und
gegebenenfalls ein organisches Lösemittel werden
während etwa 5 bis 15 min bei Raumtemperatur vermischt, die Vernetzung erfolgt anschließend bei etwa
35° bis 85° C und während etwa 5 bis 30 min, nach
Zugabe des Veretherungsmittels wird dann die Temperatur gehalten oder bis auf maximal etwa 85° C erhöht
und die Reaktion während etwa 20 bis 75 min beendet.

- Die Vernetzung und die Veretherung erfolgen gleichzeitig durch Vermischung des Polyvinylalkohols, der
wäßrigen Alkalihydroxid-Lösung und gegebenenfalls
einem organischen Lösemittel mit einem Vernetzungs-
und einem Veretherungsmittel; dabei können die ersten
drei Komponenten zunächst separat bis zu etwa 15 min
lang vermischt werden, die Zugabe der Reaktionsmittel
kann aber auch unmittelbar erfolgen; die eigentliche
Veretherungs- und Vernetzungsreaktion wird bei etwa
30° bis 85° C während etwa 30 bis 75 min durchgeführt.

Das erfindungsgemäße Verfahren führt in den beschriebenen
Ausführungsformen in der Regel zu Produkten, die noch einen
gewissen wasserlöslichen Anteil im Bereich von etwa 10 bis
60 Gew.-%, bevorzugt von etwa 15 bis 50 Gew.-% enthalten.
Für viele Verwendungszwecke stört dies nicht, so daß sich
ein Entfernen der wasserlöslichen Teile meist erübrigt.
In einigen Fällen der Weiterverarbeitung und Anwendung von
erfindungsgemäß hergestellten quellfähigen, vernetzten
Polyvinylethern ist dieser Anteil sogar vorteilhaft, da
er beispielsweise seine Haftfestigkeit an oder auf Unterlagen erhöht oder bessere Oberflächeneigenschaften (weniger
harte Oberfläche) ergibt.

Die erfindungsgemäß hergestellten Produkte zeigen ein
gutes Saug- und Quellvermögen und können die aufgenommene
Menge an Flüssigkeit auch in ausreichender Menge zurückhalten. Sie können deshalb insbesondere zur Aufnahme und/
oder Zurückhaltung von wäßrigen Flüssigkeiten oder von
Feuchte Verwendung finden, wozu beispielsweise die am
Anfang der Beschreibung aufgeführten Anwendungsgebiete
zählen.

Unter den in der Beschreibung und den Beispielen zur
Charakterisierung der erfindungsgemäß hergestellten Produkte
verwendeten Parameter ist folgendes zu verstehen:

DS    durchschnittliche Anzahl von substituierten Hydroyl-
      gruppen pro Polymereneinheit $[-CH_2 - CH(OH) -]$, sie
      beträgt maximal 1,0,

MS durchschnittliche Anzahl umgesetzter Moleküle (Ionen) der substituierenden Verbindung pro Polymereneinheit $[- CH_2 - CH(OH) -]$, er kann auch größer als 1,0 sein,

WRV Wasserrückhaltevermögen des Produktes in g $H_2O$, gemessen gegen 1.600-fache Erdbeschleunigung, bezogen auf 100 g seines wasserunlösliches Anteils; das WRV wird nach Eintauchen der Probe in Wasser bestimmt,

WUA wasserunlöslicher Anteil im Produkt in Gew.-%, und

$SV_{NaCl}$ Saugvermögen des Produktes in g an 1 %iger wäßriger NaCl-Lösung, die von 100 g des Produktes aufgesaugt werden.

Die folgenden Reaktionen werden so durchgeführt, daß das Reaktionsgemenge eine gequollene, pastenartige (aber nicht gummiartige) Konsistenz hat. Die Molangaben beziehen sich immer auf 1 Mol Polyvinylalkohol; werden Reaktionskomponenten mehrmals während der Reaktion zugegeben, so bezieht sich die Molangabe auf die Summe der Einzelmengen.

Beispiel 1
Es werden 176,0 g eines Polyvinylalkohols (hergestellt aus Polyvinylacetat durch Verseifung, wobei 88 % der Substituenten Hydroxylgruppen sind) in einem Kneter (Typ AK 1 der Firma Drais) mit 171,4 g einer 28 gew.-%igen wäßrigen NaOH-Lösung (= 0,34 Mol NaOH und 1,94 Mol $H_2O$) während 30 min bei 25° C verknetet. Danach wird die Vernetzung gleichzeitig mit der Verätherung durchgeführt, wozu 2,0 g Bisacrylamido-

- 14 -

essigsäure (= 0,0029 Mol) und 116,5 g Na-monochloracetat (= 0,28 Mol) zugegeben und bei 60° C während 30 min zur Reaktion gebracht werden. Das Reaktionsgemenge wird anschließend mit Eisessig gegen Phenolphthalein neutralisiert, filtriert und der Rückstand mehrmals mit 80 gew.-%igem wäßrigem Methanol salzfrei gewaschen und bei etwa 60° C getrocknet; DS = 0,2, WRV = 24.000, WUA = 54, $SV_{NaCl}$ = 1.000.

Beispiel 2

Es wird nach Beispiel 1, aber mit 4 g Bisacrylamido-essigsäure (= 0,0057 Mol) als Vernetzer verfahren; DS = 0,2, WRV = 16.500, WUA = 75, $SV_{NaCl}$ = 1.900.

Beispiel 3

Es werden 176,0 g eines Polyvinylalkohols des Beispiels 1 in einem Kneter mit 96,0 g einer 50 gew.-%igen wäßrigen NaOH-Lösung (= 0,34 Mol NaOH) und 60,0 g eines 87 gew.-%igen wäßrigen Isopropanols (= 0,297 Gew.-Teile 100 %igen Isopropanols, bezogen auf 1 Gew.-Teil Polyvinylalkohol, und 0,88 Mol Gesamt-$H_2O$) während 30 min bei 20° C verknetet.

Danach wird mit 3,7 g Epichlorhydrin (= 0,011 Mol) während 15 min bei 60° C anvernetzt und die Reaktion nach Zugabe von 116,5 g Na-monochloracetat (= 0,284 Mol) als Veretherungsmittel vervollständigt, die Aufarbeitung erfolgt nach Beispiel 1; DS = 0,22, WRV = 4.000, WUA = 71, $SV_{NaCl}$ = 1.300.

## Patentansprüche

1. Verfahren zur Herstellung von quellfähigen, zu mehr als 40 Gew.% wasserunlöslichen, vernetzten Ethern des Polyvinylalkohols durch Veretherung von Polyvinylalkohol, unter vorhergehender, gleichzeitiger oder nachfolgender Vernetzung mit mindestens bifunktionell gegenüber den Hydroxylgruppen des Polyvinylalkohols und/oder des Polyvinylethers reaktionsfähigen Vernetzungsmitteln in wäßrig-alkalischem, gegebenenfalls ein organisches Lösemittel enthaltendem Medium, dadurch gekennzeichnet, daß

auf 1 Mol Polyvinylalkohol

    0,1    bis 0,8  Mol Alkalihydroxid,
    0,5    bis 5,0   "  Wasser,
    0,001 bis 0,05   "  Vernetzungsmittel und
    0,01   bis 1,0   "  Veretherungsmittel

eingesetzt werden.

2. Verfahren nach Anspruch 1, dadurch gekennzeichnet, daß
    auf 1 Mol Polyvinylalkohol
    0,25   bis 0,5  Mol Alkalihydroxid,
    0,7    bis 3,0   "  Wasser,
    0,002 bis 0,02   "  Vernetzungsmittel und
    0,1    bis 0,4   "  Veretherungsmittel

eingesetzt werden.

HOECHST AKTIENGESELLSCHAFT
KALLE Niederlassung der Hoechst AG

- 16 -

3. Verfahren nach Anspruch 1 oder 2, dadurch gekennzeichnet, daß zusätzlich 0,01 bis 1,0 Gew.-Teile eines organischen Lösemittels pro Gew.-Teil Polyvinylalkohol eingesetzt werden.

4. Verfahren nach einem der Ansprüche 1 bis 3, dadurch gekennzeichnet, daß als Vernetzungsmittel Dichloressigsäure, Phosphoroxychlorid oder eine Verbindung eingesetzt wird, die als funktionelle Gruppe(n) mindestens zweimal

a) 
$$H\diagdown C = C \diagup R \diagdown C - N -$$

die Acrylamidogruppe, wobei R = H oder $CH_3$ ist,

b) 
$$- N = C \diagup \diagdown Cl$$

die Chlor-azomethingruppe,

c) $- N = C - O - CH_2 - CH = CH_2$ die Allyloxy-azomethingruppe

oder mindestens einmal

d) 
$$H\diagdown C - C - C - H\diagup \diagup O \diagdown Hal$$

eine $\alpha$-Halogen-epoxygruppe, wobei Hal = Cl oder Br ist

aufweist.

5. Verfahren nach einem der Ansprüche 1 bis 4, dadurch gekennzeichnet, daß als Veretherungsmittel Monohalogenalkancarbonsäuren oder ihre Salze eingesetzt werden.

HOECHST AKTIENGESELLSCHAFT
KALLE Niederlassung der Hoechst AG

- 17 -

6. Verfahren nach einem der Ansprüche 1 bis 5, dadurch gekennzeichnet, daß als Veretherungsmittel Monochloressigsäure oder eines ihrer Salze eingesetzt wird.

7. Verfahren nach einem der Ansprüche 3 bis 6, dadurch gekennzeichnet, daß als organisches Lösemittel ein Alkohol mit 1 bis 6 C-Atomen eingesetzt wird.

8. Verfahren nach einem der Ansprüche 3 bis 7, dadurch gekennzeichnet, daß als organisches Lösemittel Isopropanol eingesetzt wird.

9. Verfahren nach einem der Ansprüche 1 bis 8, dadurch gekennzeichnet, daß als Vernetzungsmittel ein Bisacrylamido-Derivat oder Epichlorhydrin eingesetzt wird.

10. Verwendung der nach einem Verfahren gemäß einem der Ansprüche 1 bis 9 hergestellten vernetzten Ether des Polyvinylalkohols zur Aufnahme und/oder Zurückhaltung von wäßrigen Flüssigkeiten oder von Feuchte.

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| | CHEMICAL ABSTRACTS, Band 84, Nr. 4., 26. Januar 1976, Zusammenfassung Nr. 18145v, Seite 32, Columbus, Ohio, US, L.E. UNKSOVA et al.: "Preparation of carboxymethyl ethers of poly (vinyl alcohol). & NEFT GAZ, 1974, 124-5 * Zusammenfassung * | 1,3,5, 6,7 | C 08 F 8/00// A 61 L 15/00 |
| | CHEMICAL ABSTRACTS, Band 74, Nr. 24, 14. Juni 1971, Zusammenfassung Nr. 126703c, Seite 46, Columbus, Ohio, US, T.E. SOBKO et al.: "Preparation of carboxymethylated poly (vinyl alcohol) and properties of films based on it" & IZV. VYSSH. UCHEB. ZAVED., TEKHNOL. LEGK. PROM. 1971, (1) 50-4 * Zusammenfassung * | 1,5,6, 10 | **RECHERCHIERTE SACHGEBIETE (Int. Cl. 3)** C 08 F 8/00 8/02 A 61 L 15/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-09-1980 | PEETERS J.C.J. |

EPA form 1503.1  06.78